# EUROPÄISCHE PATENTSCHRIFT

(11) **EP 2 487 374 B1**
(45) Veröffentlichungstag und Bekanntmachung des Hinweises auf die Patenterteilung: **20.01.2016**
(21) Anmeldenummer: 11000567.5
(22) Anmeldetag: 25.01.2011
(51) Int. Cl.: F16B 13/08

(54) **Verfahren und System zum Setzen eines selbstschneidenden Hinterschnittankers**
Method and system for setting a self-tapping undercut anchor
Procédé et système de fixation d'une ancre contre-dépouillée auto-taraudeuse

(43) Veröffentlichungstag der Anmeldung: 15.08.2012
(73) Patentinhaber: UIP GmbH & Co. KG, 63814 Mainaschaff (DE)
(72) Erfinder: Göttlich, Harald, 30900 Wedemark (DE)
(74) Vertreter: Westphal, Mussgnug & Partner Patentanwälte mbB

(56) Entgegenhaltungen:
- EP-A1- 1 357 302
- US-A1- 2002 189 866
- US-A1- 2009 214 315

## Beschreibung

Die Erfindung betrifft ein Verfahren sowie ein System zum Setzen eines Hinterschnittankers.

Im Bereich der Bautechnik stellt sich häufig die Aufgabe, Lasten in Bauteile wie Beton oder Stahlbeton einzuleiten. Hierzu sind diverse Befestigungsmittel bekannt, die je nach ihrem Mechanismus und der Art der Kraftübertragung eingeteilt werden können.

In der Schwerlastbefestigung gibt es grundsätzlich zwei Arten von mechanischen Ankern. Die einen Anker werden Expansionsanker genannt und halten aufgrund eines Reibschlusses im Ankergrund. Die anderen Anker halten aufgrund eines Formschlusses im Ankergrund und werden Hinterschnittanker genannt.

Aus der Veröffentlichung "Qualification of Post-Installed Mechanical Anchors in Concrete and Commentary" des American Concrete Institutes, ISBN 978-0-87031-247-2, First Printing June 2007, ACI 355.2-07, sind diverse mechanische Anker und deren Abwandlungen beschrieben.

Die vorliegende Erfindung bezieht sich auf die so genannten Hinterschnittanker. Eine Einteilung der bekannten Verfahren zum Setzen derartiger Hinterschnittanker findet sich in den Figuren 2.3 a-f der genannten Veröffentlichung in schematischer Darstellung.

Nachteilig an den dort beschriebenen Verfahren zum Setzen eines Hinterschnittankers ist, dass eine präzise Bohrlochtiefe einzuhalten ist und/oder dass ein Drehmomentschlüssel erforderlich und dabei ein bestimmtes Drehmoment einzuhalten ist und/oder dass kostspielige Kragenbohrer oder dergleichen zum Erzeugen einer Hinterschnitt-Aushöhlung erforderlich sind.

Ausgehend von diesem Stand der Technik liegt der Erfindung die Aufgabe zugrunde, ein Verfahren und ein System zum Setzen eines selbstschneidenden Hinterschnittankers bereitzustellen, welches die Einhaltung einer präzisen Bohrlochtiefe und die Verwendung eines Drehmomentschlüssels mit vorgegebenem Drehmoment sowie den Einsatz kostspieliger Kragenbohrer oder dergleichen zum Erzeugen einer Hinterschnitt-Aushöhlung überflüssig macht. Eine weitere Aufgabe der Erfindung besteht darin, ein Verfahren und ein System zum Setzen eines selbstschneidenden Hinterschnittankers hinsichtlich der zu erfüllenden Funktion, des Einsatzbereichs, der Durchführbarkeit, der Verringerung der Verletzungsgefahr und der zuverlässigen Reproduzierbarkeit zu verbessern. Insgesamt soll auch ein kostengünstigeres Verfahren und System zum Setzen eines selbstschneidenden Hinterschnittankers bereitgestellt werden. Aufgabe der vorliegenden Erfindung ist auch, ein System bereitzustellen, mit dem ein selbstschneidender Hinterschnittanker ohne großen Aufwand vorzugsweise oberflächennah im Ankergrund verankerbar ist, wobei der Hinterschnittanker auch in sicherheitsrelevanten Bereichen einsetzbar sein soll und Verankerungen mit ausreichend hohen Haltewerten ermöglichen soll. Ferner liegt der Erfindung die Aufgabe zugrunde, ein Verfahren zum sehr schnellen Setzen des selbstschneidenden Hinterschnittankers im vorzugsweise oberflächennahen Ankergrund bereitzustellen, derart, dass direkt nach dem Setzen, also ohne Wartezeit, ein Bauteil oder dergleichen am Hinterschnittanker befestigt werden kann.

Diese Aufgabe wird durch ein Verfahren zum Setzen eines selbstschneidenden Hinterschnittankers mit den Merkmalen des Anspruchs 1 und durch ein System zum Setzen eines selbstschneidenden Hinterschnittankers mit den Merkmalen des Anspruchs 11 gelöst. Vorteilhafte Ausgestaltungen und Weiterbildungen der Erfindung ergeben sich aus den jeweiligen Unteransprüchen.

Ein zum Ausführen des erfindungsgemäßen Verfahrens besonders geeigneter Hinterschnittanker umfasst eine Spreizhülse, die durch Längsschlitze, welche in Setzrichtung im vorderen Bereich der Spreizhülse angeordnet sind, in Spreizzungen unterteilt ist, und die in Setzrichtung im hinteren Bereich ein Innengewinde aufweist. Der Hinterschnittanker umfasst außerdem einen Spreizkörper, der in Setzrichtung im vorderen Bereich der Spreizhülse innerhalb der Spreizhülse angeordnet ist.

Erfindungsgemäß sind folgende Verfahrensschritte vorgesehen:
a) Einschrauben einer Kragenhülse in das in Setzrichtung im hinteren Bereich angeordnete Innengewinde der Spreizhülse
b) Einbringen der Spreizhülse in ein im Ankergrund eingebrachtes Bohrloch, derart, dass die an der Spreizhülse befestigte Kragenhülse mit der Unterseite des Kragens auf dem Ankergrund bzw. der Oberkante des Bohrlochs aufsetzt
c) Einführen eines Einschlagbolzens durch die Kragenhülse in die Spreizhülse
d) Einschlagen des Einschlagbolzens in Setzrichtung, derart, dass der Spreizkörper durch das in Setzrechtung gesehen vordere Ende des Einschlagbolzens in Setzrichtung nach vorne, also tiefer in die Spreizhülse gedrückt wird, derart, dass die Spreizzungen zur Verankerung im Ankergrund aufgespreizt werden und mit ihren Schneidkanten in den Ankergrund einschneiden
e) Entfernen des Einschlagbolzens oder der Kragenhülse samt Einschlagbolzen, von der Spreizhülse.

Ein solches Verfahren ermöglicht mittels eines einfachsten Werkzeugs eine einfache Montage eines selbstschneidenden Hinterschnittankers mit garantiert korrektem Hinterschnitt, insbesondere in sicherheitsrelevanten Bereichen, wobei Verankerungen mit ausreichend hohen Haltewerten erreicht werden. Vorteilhaft ist hierbei, dass keine präzise Bohrlochtiefe erforderlich ist. Auch ein Drehmomentwerkzeug mit vorgeschriebenem Drehmoment ist nicht erforderlich. Das Setzen des Hinterschnittankers ist weniger zeit- und mithin weniger kostenintensiv.

Es kann für bestimmte Einsatzzwecke von Vorteil sein, wenn der Verfahrensschritt c) vor dem Verfahrensschritt b) ausgeführt wird.

Für gewisse Einsatzzwecke kann es auch zweckmäßig sein, wenn das Einführen des Einschlagbolzens durch die Kragenhülse gemäß Verfahrenschritt c) vor dem Verfahrensschritt a) ausgeführt wird, derart, dass Kragenhülse und Einschlagbolzen dann zusammen ein Montagewerkzeug bilden, und dass anschließend gemäß Verfahrenschritt a) die Kragenhülse mit Einschlagbolzen in das in Setzrichtung im hinteren Bereich angeordnete Innengewinde der Spreizhülse eingeschraubt wird, wobei Verfahrensschritt c) dann entfällt.

Es kann weiterhin vorteilhaft sein, wenn der Bolzenkopf des Einschlagbolzens auf der Oberseite des Kragens der Kragenhülse beim Einschlagen aufsetzt.

Es kann auch von Vorteil sein, wenn die Kragenhülse samt Einschlagbolzen oder die Kragenhülse nach Entfernen des Einschlagbolzens aus der Spreizhülse durch Herausschrauben entfernt wird, wobei der Kragen der Kragenhülse hierzu vorzugsweise als Werkzeugangriff, besonders bevorzugt als Sechskant, ausgebildet ist.

Eine Weiterbildung der Erfindung sieht vor, dass das Bohrloch derart gebohrt wird, dass dessen Länge mindestens gleich groß wie, vorzugsweise größer als die Länge der Spreizhülse ist.

Es kann vorteilhaft sein, wenn der Hinterschnittanker oberflächennah verankert wird, derart, dass das in Setzrichtung hintere Ende der Spreizhülse im Wesentlichen mit der Bohrlochkante abschließt.

Es kann zweckmäßig sein, wenn nach dem Entfernen des Einschlagbolzens oder der Kragenhülse samt Einschlagbolzen die verankerte Spreizhülse zur weiteren Verwendung, vorzugsweise zur Befestigung von Bauteilen, zur Verfügung steht, wobei entsprechende Befestigungsmittel, vorzugsweise zur Befestigung der Bauteile, in die Spreizhülse eingeschraubt werden.

Eine vorteilhafte Ausgestaltung der Erfindung sieht vor, dass das Setzen des Hinterschnittankers zumindest halbautomatisiert erfolgt, indem der Hinterschnittanker aus Spreizhülse und Spreizkörper als Einheit mit dem Montagewerkzeug aus Kragenhülse und Einschlagbolzen versehen in das Bohrloch eingeführt wird, wobei mittels einer Maschine, vorzugsweise eines Bohrhammers, mit speziellem Aufsatz, vorzugsweise bereits das vor genannte Einführen, in jedem Fall aber das Einschlagen des Einschlagbolzens und das Entfernen, vorzugsweise Herausschrauben, der Kragenhülse samt Einschlagbolzen aus der Spreizhülse durchgeführt wird.

Es kann vorteilhaft sein, wenn das mit der Maschine verbundene bzw. im Aufsatz aufgenommene Montagewerkzeug aus Kragenhülse und Einschlagbolzen nach dem Entfernen aus der Spreizhülse mit einer neuen Spreizhülse samt Spreizkörper versehen wird, so dass ein neuer Zyklus zum Setzen des selbstschneidenden Hinterschnittankers erfolgen kann.

Die Erfindung betrifft außerdem ein System zum Setzen eines Hinterschnittankers in einen Ankergrund, umfassend
a) einen Hinterschnittanker mit einer Spreizhülse, die durch Längsschlitze, welche in Setzrichtung im vorderen Bereich der Spreizhülse angeordnet sind, in Spreizzungen unterteilt ist, und die in Setzrichtung im hinteren Bereich ein Innengewinde aufweist, und mit einem Spreizkörper, der in Setzrichtung im vorderen Bereich der Spreizhülse innerhalb der Spreizhülse angeordnet ist,
b) eine Kragenhülse, die ein Außengewinde aufweist und entsprechend in das Innengewinde der Spreizhülse einschraubbar ist und
c) einen Einschlagbolzen, der in Setzrichtung durch die Kragenhülse in die Spreizhülse einführbar bzw. einschlagbar ist.

Eine vorteilhafte Ausgestaltung der Erfindung sieht vor, dass der Einschlagbolzen in Setzrichtung im hinteren Bereich, insbesondere am hinteren Ende, einen Bolzenkopf aufweist.

Es kann vorteilhaft sein, wenn der Kragen der Kragenhülse einen Werkzeugangriff aufweist, derart, dass die Kragenhülse vereinfacht in die und aus der Spreizhülse schraubbar ist.

Es kann von Vorteil sein, wenn der Bolzenkopf derart ausgebildet ist, dass dieser nach dem Einschlagen und nach dem Aufsetzen auf den Kragen eine Markierung als Nachweis für den vollständig erfolgten Einschlag aufweist.

Weiterhin kann es von Vorteil sein, wenn es sich bei der Markierung um auf der Unterseite des Bolzenkopfes erkennbare Riefen handelt.

Es kann zweckmäßig sein, wenn die Länge des Einschlagbolzens derart gewählt ist, dass der Spreizköper um eine vorgegebene Tiefe in die Spreizhülse gedrückt wird, um die Spreizzungen auseinanderzuspreizen und einen Hinterschnitt zu erzeugen.

Vorteilhaft kann der Einschlagbolzen in Setzrichtung im vorderen Bereich, insbesondere am vorderen Ende, stumpf ausgebildet sein.

Es kann zweckmäßig sein, wenn der Schaft des Einschlagbolzens gewindelos ausgebildet ist.

Es kann vorteilhaft sein, wenn die Länge der Spreizhülse 10 mm bis 120 mm, vorzugsweise 30 mm bis 60 mm, beträgt.

Es kann von Vorteil sein, wenn der Durchmesser der Spreizhülse 6 mm bis 30 mm, vorzugsweise 12 mm bis 20 mm, beträgt.

Eine vorteilhafte Ausgestaltung der Erfindung sieht vor, dass der Spreizkörper aus Kunststoff oder Metall, vorzugsweise aus Stahl, oder einem Verbundwerkstoff besteht.

Es kann von Vorteil sein, wenn die Spreizzungen auf der Außenseite ihrer freien Enden wenigstens eine, vorzugsweise mehrere hintereinander, besonders bevorzugt drei, noch bevorzugter zwei hintereinander angeordnete Schneidkanten aufweisen.

Eine Weiterbildung der Erfindung sieht vor, dass der Hinterschnittanker in Betonund Stahlbetonbauteile, bevorzugt in Wände, besonders bevorzugt in Mauerwerk oder ganz besonders bevorzugt in Decken, setzbar ist.

Es kann auch von Vorteil sein, wenn ein Hinterschnittanker aus vor genannter Spreizhülse samt Spreizkörper, aber ohne Kragenhülse, mittels eines in die Spreizhülse einführbaren Einschlagbolzens in ein Bohrloch eingebracht wird, derart, dass der Einschlagbolzen den Hinterschnittanker bis auf den Bohrlochgrund schiebt bzw. bis die Spreizhülse auf den Bohrlochgrund aufsetzt, wenn anschließend das Einschlagen des Einschlagbolzens in Setzrichtung erfolgt, derart, dass der Spreizkörper durch das in Setzrechtung gesehen vordere Ende des Einschlagbolzens in Setzrichtung nach vorne, also tiefer in die Spreizhülse gedrückt wird, derart, dass die Spreizzungen zur Verankerung im Ankergrund aufgespreizt werden und mit ihren Schneidkanten in den Ankergrund einschneiden, und wenn schließlich der Einschlagbolzen aus der Spreizhülse entfernt wird. Vorzugsweise kann auch hier das Setzen des selbstschneidenden Hinterschnittankers zumindest halbautomatisiert erfolgen, wobei vorteilhaft ein Maschine mit speziellem Aufsatz zur Aufnahme und zum Einschlagen des Einschlagbolzen zum Einsatz kommen kann. Dabei kann es sich vorteilhaft um einen Bohrhammer mit entsprechendem Aufsatz handeln.

Dadurch wird erreicht, dass ein Hinterschnittanker in einem Bohrloch versenkt werden kann, wenn der tragfähige Ankergrund nicht oberflächenah angeordnet ist.

Nachfolgend wird die Erfindung anhand eines Ausführungsbeispiels erläutert, das in der einzigen Figur dargestellt ist. Anhand dieser wird nachfolgend das erfindungsgemäße Verfahren und System zum Setzen eines selbstschneidenden Hinterschnittankers erläutert. Gleiche Bezugszeichen bezeichnen hierbei gleiche Teile.

Das erfindungsgemäße System zum Setzen eines Hinterschnittankers 10 in einen Ankergrund 11, umfasst
- einen Hinterschnittanker 10 mit einer Spreizhülse 12, die durch Längsschlitze 14, welche in Setzrichtung 16 im vorderen Bereich der Spreizhülse 12 angeordnet sind, in Spreizzungen 18 unterteilt ist, und die in Setzrichtung 16 im hinteren Bereich ein Innengewinde 20 aufweist, und mit einem Spreizkörper 22, der in Setzrichtung 16 im vorderen Bereich der Spreizhülse 12 innerhalb der Spreizhülse 12 angeordnet ist,
- eine Kragenhülse 24, die ein Außengewinde aufweist und entsprechend in das Innengewinde 20 der Spreizhülse 12 einschraubbar ist und
- einen Einschlagbolzen 32, der in Setzrichtung durch die Kragenhülse24 in die Spreizhülse 12 einführbar bzw. einschlagbar ist.

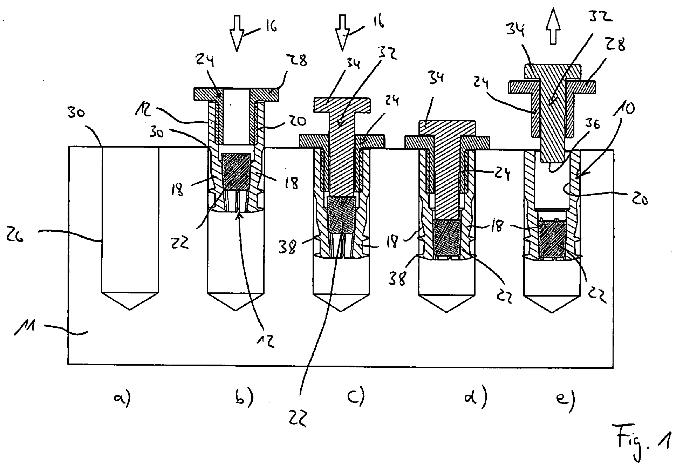

Das erfindungsgemäße Verfahren zum Setzen eines selbstschneidenden Hinterschnittankers umfasst nach dem Einbringen eines Bohrlochs 26 in den Ankergrund 11, wie in a) der Fig. 1 dargestellt, folgende Verfahrensschritte:
- Einschrauben einer Kragenhülse 24 in das in Setzrichtung 16 im hinteren Bereich angeordnete Innengewinde 20 der Spreizhülse 12 und Einbringen der Spreizhülse 12 in das im Ankergrund 11 eingebrachte Bohrloch 26, wie in b) der Fig. 1 dargestellt, so dass die an der Spreizhülse 12 befestigte Kragenhülse 24 mit der Unterseite des Kragens 28 auf dem Ankergrund 11 bzw. der Oberkante 30 des Bohrlochs 26 aufsetzt, wie in c) der Fig. 1 dargestellt,
- Einführen eines Einschlagbolzens 32 durch die Kragenhülse 24 in die Spreizhülse 12, wie in c) der Fig. 1 dargestellt,
- Einschlagen des Einschlagbolzens 32 in Setzrichtung 16, wie in d) der Fig. 1 dargestellt, derart, dass der Spreizkörper 22 durch das in Setzrechtung 16 gesehen vordere Ende 36 des Einschlagbolzens 32 in Setzrichtung 16 nach vorne, also tiefer in die Spreizhülse 12 gedrückt wird, derart, dass die Spreizzungen 18 zur Verankerung im Ankergrund 11 aufgespreizt werden und mit ihren Schneidkanten 38 in den Ankergrund 11 einschneiden
- Entfernen der Kragenhülse 24 samt Einschlagbolzen 32 von der Spreizhülse (12), wie in e) der Fig. 1 dargestellt.

### Bezugszeichenliste

### (ist Teil der Beschreibung)

- 10: Hinterschnittanker
- 11: Ankergrund
- 12: Spreizhülse
- 14: Längsschlitze
- 16: Setzrichtung
- 18: Spreizzungen
- 20: Innengewinde
- 22: Spreizkörper
- 24: Kragenhülse
- 26: Bohrloch
- 28: Kragen
- 30: Oberkante
- 32: Einschlagbolzen
- 34: Bolzenkopf
- 36: vorderes Ende
- 38: Schneidkante

## Patentansprüche

1. Verfahren zum Setzen eines selbstschneidenden Hinterschnittankers (10) in einen Ankergrund (11),
wobei der Hinterschnittanker (10) eine Spreizhülse (12) umfasst, die durch Längsschlitze (14), welche in Setzrichtung (16) im vorderen Bereich der Spreizhülse (12) angeordnet sind, in Sprelzzungen (18) unterteilt ist,
und die in Setzrichtung (16) im hinteren Bereich ein Innengewinde (20) aufweist,
und wobei der Hinterschnittanker (10) einen Spreizkörper (22) umfasst, der in Setzrichtung (16) im vorderen Bereich der Spreizhülse (12) innerhalb der Spreizhülse (12) angeordnet ist, mit folgenden Verfahrensschritten:
a) Einschrauben einer Kragenhülse (24) in das in Setzrichtung (16) im hinteren Bereich angeordnete Innengewinde (20) der Spreizhülse (12)
b) Einbringen der Spreizhülse (12) In ein im Ankergrund (11) eingebrachtes Bohrloch (26), derart, dass die an der Spreizhülse (12) befestigte Kragenhülse (24) mit der Unterseite des Kragens (28) auf dem Ankergrund (11) bzw. der Oberkante (30) des Bohrlochs (26) aufsetzt
c) Einführen eines Einschlagbolzens (32) durch die Kragenhülse (24) in die Spreizhülse (12)
d) Einschlagen des Einschlagbolzens (32) in Setzrichtung (16), derart, dass der Spreizkörper (22) durch das in Setzrechtung (16) gesehen vordere Ende (36) des Einschlagbolzens (32) in Setzrichtung (16) nach vorne, also tiefer in die Spreizhülse (12) gedrücktwird, derart, dass die Spreizzungen (18) zur Verankerung im Ankergrund (11) aufgespreizt werden und mit ihren Schneidkanten (38) in den Ankergrund (11) einschneiden
e) Entfernen des Einschlagbolzens (32) oder der Kragenhülse (24) samt Einschlagbolzen (32), von der Spreizhülse (12), wobei
Hinterschnittanker (10) oberflächennah verankert wird, derart, dass das in Setzrichtung (10) hintere Ende der Spreizhülse (12) im Wesentlichen mit der Bohrlochkante (30) abschließt.

2. Verfahren nach Anspruch 1, **dadurch gekennzeichnet, dass** der Verfahrensschritt c) vor dem Verfahrensschritt b) ausgeführt wird.

3. Verfahren nach Anspruch 1 oder 2, **dadurch gekennzeichnet, dass** das Einführen des Einschlagbolzens (32) durch die Kragenhülse (24) gemäß Verfahrenschritt c) vor dem Verfahrensschritt a) ausgeführt wird, derart, dass Kragenhülse (24) und Einschlagbolzen (32) dann zusammen ein Montagewerkzeug bilden, und dass anschließend gemäß Verfahrenschritt a) die Kragenhülse (24) mit Einschlagbolzen (32) in das in Setzrichtung (16) im hinteren Bereich angeordnete Innengewinde (20) der Spreizhülse (12) eingeschraubt wird, wobei Verfahrensschritt c) dann entfällt.

4. Verfahren nach einem der Ansprüche 1 bis 3, **dadurch gekennzeichnet, dass** der Bolzenkopf (34) des Einschlagbolzens (32) auf der Oberseite des Kragens (28) der Kragenhülse (24) beim Einschlagen aufsetzt.

5. Verfahren nach einem der Ansprüche 1 bis 4, **dadurch gekennzeichnet, dass** die Kragenhülse (24) samt Einschlagbolzen (32) oder die Kragenhülse (24) nach Entfernen des Einschlagbolzens (32) aus der Spreizhülse (12) durch Herausschrauben entfernt wird, wobei der Kragen (28) der Kragenhülse (24) hierzu vorzugsweise als Werkzeugangriff, besonders bevorzugt als Sechskant, ausgebildet ist.

6. Verfahren nach einem der Ansprüche 1 bis 5, **dadurch gekennzeichnet, dass** das Bohrloch (26) derart gebohrt wird, dass dessen Länge (L) mindestens gleich groß wie, vorzugsweise größer als die Länge (L1) der Spreizhülse (12) ist.

7. Verfahren nach einem der Ansprüche 1 bis 6, **dadurch gekennzeichnet, dass** nach dem Entfernen des Einschlagbolzens (32) oder der Kragenhülse (24) samt Einschlagbolzen (32) die verankerte Spreizhülse (12) zur weiteren Verwendung, vorzugsweise zur Befestigung von Bauteilen, zur Verfügung steht, wobei entsprechende Befestigungsmittel, vorzugsweise zur Befestigung der Bauteile, in die Spreizhülse (12) eingeschraubt werden.

8. Verfahren nach einem der Ansprüche 1 bis 7, **dadurch gekennzeichnet, dass** das Setzen des Hinterschnittankers (10) zumindest halbautomatisiert erfolgt, indem der Hinterschnittanker (10) aus Spreizhülse (12) und Spreizkörper (22) als Einheit mit dem Montagewerkzeug aus Kragenhülse (24) und Einschlagbolzen (32) versehen in das Bohrloch (26) eingeführt wird, wobei mittels einer Maschine, vorzugsweise eines Bohrhammers, mit speziellem Aufsatz, vorzugsweise bereits das vor genannte Einführen, in jedem Fall aber das Einschlagen des Einschlagbolzens (32) und das Entfernen, vorzugsweise Herausschrauben, der Kragenhülse (24) samt Einschlagbolzen (32) aus der Spreizhülse (12) durchgeführt wird.

9. Verfahren nach Anspruch 8, **dadurch gekennzeichnet, dass** das mit der Maschine verbundene bzw. im Aufsatz aufgenommene Montagewerkzeug aus Kragenhülse (24) und Einschlagbolzen (32) nach dem Entfernen aus der Spreizhülse (12) mit einer neuen Spreizhülse (24) mit Spreizkörper (22) versehen wird, so dass ein neuer Zyklus zum Setzen des selbstschneidenden Hinterschnittankers (10) erfolgen kann.

10. System zum Setzen eines Hinterschnittankers (10) in einen Ankergrund (11), umfassend
a) einen Hinterschnittanker (10) mit einer Spreizhülse (12), die durch Längsschlitze (14), welche in Setzrichtung (16) im vorderen Bereich der Spreizhülse (12) angeordnet sind, in Spreizzungen (18) unterteilt ist, und die in Setzrichtung (16) im hinteren Bereich ein Innengewinde (20) aufweist, und mit einem Spreizkörper (22), der in Setzrichtung (16) Im vorderen Bereich der Spreizhülse (12) Innerhalb der Spreizhülse (12) angeordnet ist,
b) eine Kragenhülse (24), die ein Außengewinde aufweist und entsprechend in das Innengewinde (20) der Spreizhülse (12) einschraubbar ist und
c) einen Einschtagbolzen (32), der in Setzrichtung durch die Kragenhülse (24) in die Spreizhülse (12) einführbar bzw. einschlagbar ist,
wobei der Hinterschnittanker oberflächennah verankert wird, derart, dass das in Setzrichtung hintere Ende der Spreizhülse im Wesentlichen mit der Bohrlochkante abschlleßt.

11. System nach Anspruch 10, **dadurch gekennzeichnet, dass** der Einschlagbolzen (32) in Setzrichtung (16) im hinteren Bereich, insbesondere am hinteren Ende, einen Bolzenkopf (34) aufweist.

12. System nach Anspruch 10 oder 11, **dadurch gekennzeichnet, dass** der Kragen (28) der Kragenhülse (24) einen Werkzeugangriff aufweist, derart dass die Kragenhülse (24) vereinfacht in die und aus der Spreizhülse (12) schraubbar ist.

13. System nach einem der Ansprüche 10 bis 12, **dadurch gekennzeichnet, dass** der Bolzenkopf (24) derart ausgebildet ist, dass dieser nach dem Einschlagen und nach dem Aufsetzen auf den Kragen eine Markierung als Nachweis für den vollständig erfolgten Einschlag aufweist.

14. System nach Anspruch 13, **dadurch gekennzeichnet, dass** es sich bei der Markierung um auf der Unterseite des Bolzenkopfes (24) erkennbare Riefen handelt.

15. System nach einem der Ansprüche 10 bis 14, **dadurch gekennzeichnet, dass** die Länge des Einschlagbolzens (32) derart gewählt ist, dass der Spreizköper (22) um eine vorgegebene Tiefe in die Spreizhülse (12) gedrückt wird, um die Spreizzungen (18) auseinanderzuspreizen und einen Hinterschnitt zu erzeugen.

## Claims

1. Method for setting a self-cutting undercut anchor (10) into an anchor base (11), wherein the undercut anchor (10) comprises a spreading sleeve (12), which is divided into spreading tabs (18) by lengthwise slits (14), which are arranged in the setting direction (16) in the front region of the spreading sleeve (12),
and which has an inner thread (20) in the rear region in the setting direction (16),
and wherein the undercut anchor (10) comprises a spreading body (22), which is arranged inside the spreading sleeve (12) in the front region of the spreading sleeve (12) in the setting direction (16), with the following steps:
a) Screwing of a collar sleeve (24) into inner thread (20) of the spreading sleeve (12) arranged in the rear area in the setting direction (16)
b) Introducing the spreading sleeve (12) into a borehole (26) made in the anchor base (11), such that the collar sleeve (24) secured to the spreading sleeve (12) sits by the bottom side of the collar (28) on the anchor base (11) or the upper edge (30) of the borehole (26)
c) Introducing of an impactor (32) through the collar sleeve (24) into the spreading sleeve (12)
d) Striking the impactor (32) in the setting direction (16) so that the spreading body (22) is forced by the front end (36) of the impactor (32), looking in the setting direction (16), forward in the setting direction (16), i.e., deeper into the spreading sleeve (12), so that the spreading tabs (18) are spread apart for anchoring in the anchor base (11) and cut into the anchor base (11) with their cutting edges (38)
e) Removing of the impactor (32) or the collar sleeve (24) plus impactor (32) from the spreading sleeve (12), wherein the undercut anchor (10) is anchored near the surface, such that the rear end of the spreading sleeve (12) in the setting direction (10) essentially terminates with the borehole edge (30).

2. Method according to claim 1, **characterized in that** step c) is performed prior to step b).

3. Method according to claim 1 or 2, **characterized in that** the introducing of the impactor (32) through the collar sleeve (24) per step c) is done prior to step a) of the method, such that the collar sleeve (24) and impactor (32) then together form an assembly tool, and then the collar sleeve (24) with impactor (32) is screwed into the inner thread (20) of the spreading sleeve (12) arranged in the rear area in the setting direction (16) per step a) of the method, where step c) is then omitted.

4. Method according to one of claims 1 to 3, **characterized in that** the bolt head (34) of the impactor (32) is placed on the top side of the collar (28) of the collar sleeve (24) during the striking process.

5. Method according to one of claims 1 to 4, **characterized in that** the collar sleeve (24) plus impactor (32) or the collar sleeve (24) after removal of the impactor (32) is removed by unscrewing from the spreading sleeve (12), for which the collar (28) of the collar sleeve (24) is advantageously configured as a mechanical-advantage tool, especially preferably as a hexagon.

6. Method according to one of claims 1 to 5, **characterized in that** the borehole (26) is drilled such that its length (L) is at least as large, preferably larger, than the length (L1) of the spreading sleeve (12).

7. Method according to one of claims 1 to 6, **characterized in that,** after the removal of the impactor (32) or the collar sleeve (24) plus impactor (32), the anchored spreading sleeve (12) is available for further use, preferably for the fastening of structural parts, wherein corresponding fasteners, preferably for the fastening of the structural parts, are screwed into the spreading sleeve (12).

8. Method according to one of claims 1 to 7, **characterized in that** the setting of the undercut anchor (10) is done at least semi-automated, **in that** the undercut anchor (10) consisting of spreading sleeve (12) and spreading body (22) provided as a unit with the assembly tool consisting of collar sleeve (24) and impactor (32) is introduced into the borehole (26), while the aforesaid introducing, but in any case the striking of the impactor (32) and the removal, preferably by unscrewing, of the collar sleeve (24) plus impactor (32) from the spreading sleeve (12) is preferably already done by means of a machine, preferably a jackhammer, with special adapter.

9. Method according to claim 8, **characterized in that** the assembly tool of collar sleeve (24) and impactor (32), connected to the machine or inserted in the adapter, is provided with a new spreading sleeve (24) with spreading body (22) after the removal from the spreading sleeve (12), so that a new cycle of setting the self-cutting undercut anchor (10) can occur.

10. System for the setting of an undercut anchor (10) in an anchor base (11), comprising
a) an undercut anchor (10) with a spreading sleeve (12), which is divided into spreading tabs (18) by lengthwise slits (14), which are arranged in the setting direction (16) in the front region of the spreading sleeve (12), and which has an inner thread (20) in the rear region in the setting direction (16), and with a spreading body (22), which is arranged inside the spreading sleeve (12) in the front area of the spreading sleeve (12) looking in the setting direction (16),
b) a collar sleeve (24), having an outer thread and able to be screwed accordingly into the inner thread (20) of the spreading sleeve (12) and
c) an impactor (32), which can be introduced or driven into the spreading sleeve (12) through the collar sleeve (24) in the setting direction, wherein the undercut anchor is anchored near the surface, such that the rear end of the spreading sleeve in the setting direction essentially terminates with the borehole edge.

11. System according to claim 10, **characterized in that** the impactor (32) has a bolt head (34) in the rear area in the setting direction (16), especially at the rear end.

12. System according to claim 10 or 11, **characterized in that** collar (28) of the collar sleeve (24) has a mechanical-advantage tool such that the collar sleeve (24) is more easily screwed into and out from the spreading sleeve (12).

13. System according to one of claims 10 or 12, **characterized in that** the bolt head (24) is configured such that it has a marking as proof of the successfully completed insertion after the striking and after being placed on the collar.

14. System according to claim 13, **characterized in that** the marking is striations recognizable on the bottom side of the bolt head (24).

15. System according to one of claims 10 to 14, **characterized in that** the length of the impactor (32) is chosen such that the spreading body (22) is forced by a predetermined depth into the spreading sleeve (12) in order to spread the spreading tabs (18) apart and create an undercutting.

## Revendications

1. Procédé de pose d'un dispositif d'ancrage à contre-dépouille auto-coupant (10) dans un fond d'ancrage (11), où le dispositif d'ancrage à contre-dépouille (10) englobe une douille d'écartement (12) qui est subdivisée en languettes d'écartement (18) par des fentes longitudinales (14) qui sont disposées dans la direction de la pose (16), dans la zone avant de la douille d'écartement (12),
et qui comporte dans la direction de pose (16), dans la zone arrière, un filetage intérieur (20),
et où le dispositif d'ancrage à contre-dépouille (10) comprend un corps d'écartement (22) qui est installé à l'intérieur de la douille d'écartement (12), dans la direction de pose (16) dans la zone avant de la douille d'écartement (12), selon les étapes de processus suivantes :
a) Vissage d'une douille de col (24} dans le filetage intérieur (20) de la douille d'écartement (12) placée dans la direction de la pose (16), dans la zone arrière,
b) Insertion de la douille d'écartement (12) dans un orifice de forage (26) pratiqué dans le fond d'ancrage (11), de telle sorte que la douille de col (24) qui est fixée sur la douille d'écartement (12) repose avec le côté inférieur du col (28) dans le fond d'ancrage (11) ou le bord supérieur (30) de l'orifice de forage (26),
c) Insertion d'une pointe de fixation (32) par le biais de la douille de col (24) dans la douille d'écartement (12)
d) Enfoncement de force de la pointe de fixation (32) dans la direction de la pose (16), de telle sorte que l'extrémité avant (36) de la pointe de fixation (32) du corps d'écartement (22) est poussée vers l'avant vu dans la direction de la pose (16) dans la direction de la pose (16), donc plus profondément dans la douille d'écartement (12), de telle sorte que les languettes d'écartement (18) sont écartées pour l'ancrage dans le fond d'ancrage (11) et qui pénètrent par leurs arêtes de coupe (38) dans le fond d'ancrage (11)
e) Enlèvement de la pointe de fixation (32) ou de la douille de col (24) ainsi que de la pointe de fixation (32), de la douille d'écartement (12), où le dispositif d'ancrage à contre-dépouille (10) est ancré à proximité de la surface, de telle sorte que l'extrémité arrière de la douille d'écartement (12) dans la direction de la pose (10) s'arrête pour l'essentiel au bord de l'orifice de forage (30).

2. Procédé selon la revendication 1, **caractérisé en ce que** le processus c) est effectué avant le processus b).

3. Procédé selon la revendication 1 ou 2, **caractérisé en ce que** l'insertion de la pointe de fixation (32) est faite à travers la douille de col (24) selon le processus c) avant le processus a), de telle sorte que la douille de col (24) et la pointe de fixation (32) constituent alors ensemble un outil de montage, et qu'ensuite, selon le processus a), la douille de col (24) avec la pointe de fixation (32) est vissée dans le filetage intérieur (20) de la douille d'écartement (12) disposé dans la zone arrière dans la direction de la pose (16), si bien que le processus c) est alors superflu.

4. Procédé selon l'une des revendications 1 à 3, **caractérisé en ce que** la tête de boulon (34) de la pointe de fixation (32) s'appuie sur le côté supérieur du col (28) de la douille de col (24) lors de l'enfoncement de force.

5. Procédé selon l'une des revendications 1 à 4, **caractérisé en ce que** la douille de col (24) et la pointe de fixation (32) ou la douille de col (24), après l'enlèvement de la pointe de fixation (32) de la douille d'écartement (12), est enlevé par dévissage, et où le col (28) de la douille de col (24) est configuré de préférence comme prise d'outil, et de préférence comme hexagone.

6. Procédé selon l'une des revendications 1 à 5, **caractérisé en ce que** le trou de forage (26) est foré de telle manière que sa longueur (L) soit au moins aussi grande - et de préférence plus grande - que la longueur (L1) de la douille d'écartement (12).

7. Procédé selon l'une des revendications 1 à 6, **caractérisé en ce qu**'après l'enlèvement de la pointe de fixation (32) ou de la douille de col (24), ainsi que de la pointe de fixation (32), la douille d'écartement ancrée (12) est disponible pour l'utilisation ultérieure, de préférence pour la fixation d'éléments sur lesquels des moyens de fixation correspondants sont fixés, de préférence pour la fixation des éléments dans la douille d'écartement (12).

8. Procédé selon l'une des revendications 1 à 7, **caractérisé en ce que** la pose du dispositif d'ancrage à contre-dépouille (10) s'effectue de manière au moins semi-automatique, étant donné que le dispositif d'ancrage à contre-dépouille (10) est inséré dans la douille d'écartement (12) et le corps d'écartement (22) d'un seul tenant avec l'outil de montage muni de la douille de col (24) et la pointe de fixation (32) dans le trou de forage (26), et qu'on utilise une machine, de préférence un marteau de forage, munie d'une garniture spéciale, de préférence déjà avant l'insertion mentionnée, mais qu'on effectue en tout cas l'enfoncement de force de la pointe de fixation (32) et l'enlèvement, de préférence le dévissage, de la douille de col (24) et de la pointe de fixation (32) hors de la douille d'écartement (12).

9. Procédé selon la revendication 8, **caractérisé en ce que** l'outil de montage qui est relié à la machine ou installé en applique est muni d'une douille de col (24) et d'une pointe de fixation (32) après avoir été enlevé de la douille d'écartement (12) est muni d'une nouvelle douille d'écartement (24) avec un corps d'écartement (22), si bien qu'un nouveau cycle peut démarrer pour la pose du dispositif d'ancrage à contre-dépouille auto-coupant (10).

10. Système de pose d'un dispositif d'ancrage à contre-dépouille (10) dans un fond d'ancrage (11), comprenant
a) un dispositif d'ancrage à contre-dépouille (10) avec une douille d'écartement (12) qui est subdivisée en languettes d'écartement (18) qui sont placées à travers les fentes longitudinales (14) qui sont placées dans la direction de la pose (16) dans la zone avant de la douille d'écartement (12), et qui présente un filetage intérieur (20) dans la direction de pose (16) dans la zone arrière , et qui est placée avec un corps d'écartement (22) qui est posé dans la direction de la pose (16) dans la zone avant de la douille d'écartement (12) à l'intérieur de la douille d'écartement (12),
b) une douille de col (24), qui comporte un filetage extérieur et qui peut être vissée en conséquence dans le filetage intérieur (20) de la douille d'écartement (12) et
c) une pointe de fixation (32) qui peut être insérée ou enfoncée de force dans la direction de la pose à travers la douille de col (24) dans la douille d'écartement (12), où le dispositif d'ancrage à contre-dépouille est ancré à proximité de la surface, de telle sorte que l'extrémité arrière de la douille d'écartement dans la direction de la pose pour l'essentiel s'achève par l'arête de l'orifice de forage.

11. Système selon la revendication 10, **caractérisé en ce que** la pointe de fixation (32) comporte dans la direction de la pose (16) dans la zone arrière, en particulier sur l'extrémité arrière, un tête de boulon (34).

12. Système selon la revendication 10 ou 11, **caractérisé en ce que** le col (28) de la douille de col (24) comporte une prise d'outil qui est simplifiée de telle façon que la douille de col (24) peut être vissée et dévissée plus simplement sur la douille d'écartement (12).

13. Système selon l'une des revendications 10 ou 12, **caractérisé en ce que** la tête de boulon (24) est configurée de telle façon qu'après l'enfoncement de force et après la pose sur le col un marquage, elle apporte une preuve de ce que l'enfoncement de force a été fait avec succès.

14. Système selon la revendication 13, **caractérisé en ce que** le marquage sur le côté inférieur de la tête de boulon (24) est constitué par des cannelures identifiables.

15. Système selon l'une des revendications 10 à 14, **caractérisé en ce que** la longueur de la pointe de fixation (32) est choisie de telle manière que le corps d'écartement (22) est enfoncée à une profondeur prescrite dans la douille d'écartement (12), afin d'écarter les languettes d'écartement (18) les unes des autres et de créer une contre-dépouille.
